(19) Europäisches Patentamt
European Patent Office
Office européen des brevets

(11) **EP 1 041 356 A1**

(12) **EUROPEAN PATENT APPLICATION**

(43) Date of publication:
**04.10.2000 Bulletin 2000/40**

(51) Int. Cl.$^7$: **G01B 7/34**, G06K 9/00, G01D 5/241

(21) Application number: **00106857.6**

(22) Date of filing: **30.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **31.03.1999 JP 9043699**
**08.12.1999 JP 34878699**

(71) Applicant:
**MITSUBISHI DENKI KABUSHIKI KAISHA**
**Tokyo 100-8310 (JP)**

(72) Inventors:
• **Hashido, Ryuichi**
**Chiyoda-ku, Tokyo 100-8310 (JP)**
• **Urakabe, Takahiro**
**Chiyoda-ku, Tokyo 100-8310 (JP)**
• **Suzuki, Akihiro**
**Chiyoda-ku, Tokyo 100-8310 (JP)**
• **Iwata, Akihiko**
**Chiyoda-ku, Tokyo 100-8310 (JP)**

(74) Representative:
**Popp, Eugen, Dr. et al**
**MEISSNER, BOLTE & PARTNER**
**Postfach 86 06 24**
**81633 München (DE)**

(54) **Uneveness detecting sensor, fingerprint ID system and personal ID system**

(57) An unevenness detecting sensor has a sensing element array (2000) including N row by M column sensing elements (10), each sensing element having a sensing electrode (1) and a converter (2) for converting the change of a capacitor formed between the sensing electrode and an object in close vicinity to the sensing electrode into a voltage or a current. Each of the sensing elements is connected to one of scanning lines (100) disposed along columns of the sensing element array, and to one of output lines (200) disposed along rows of the sensing element array. The unevenness detecting sensor has a high S/N ratio.

FIG.1

**Description**

BACKGROUND OF THE INVENTION

Field of the Invention

The present invention relates to a sensor for capturing an uneven surface of an object like a fingerprint in terms of capacitance distribution, and for electrically detecting the distribution.

Description of Related Art

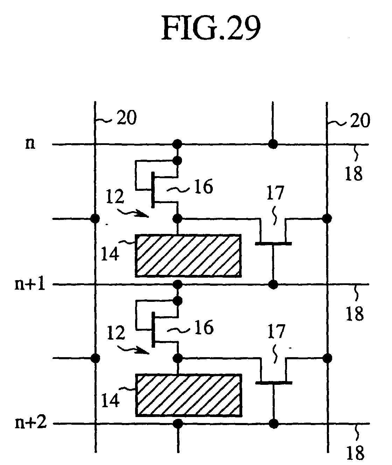

As a system for detecting an uneven surface of an object, a fingerprint sensor is disclosed in W097/40744 publication. Fig. 29 shows a major portion of the fingerprint sensor employed in the system. Cells as shown in this figure are arranged in an array to constitute the fingerprint sensor. In Fig. 29, each reference numeral 12 designates a sensing element consisting of a sensing electrode 14 for forming a capacitor between it and a fingerprint placed thereon. The sensor forms capacitors between the fingerprint and sensing electrodes 14 only when the fingerprint is present on the sensor. Each capacitor formed stores charges supplied from a first scanning line 18 through a switching element 16 before scanning, and each switching element 17 operates such that each second scanning line (output line) 20 outputs the charges during the scanning. The capacitors formed differ from cell to cell because the distance between the fingerprint and each sensing electrode 14 varies. This means that the charges stored in the capacitors differ, and hence the uneven pattern of the fingerprint can be obtained by two-dimensionally measuring the charges by scanning the first and second scanning lines 18 and 20. The charges are very small because the capacitors formed by the fingerprint and sensing elements are very small. Thus, the charges must be amplified by charge amplifiers connected to the output lines 20 to improve the S/N ratio.

With such an arrangement, the conventional system requires a high-performance circuit for reading the very small charges. In addition, the system is vulnerable to noise on the output lines. Moreover, the sensor is in danger of being destroyed because of the effect of electrostatic buildup in a human body.

SUMMARY OF THE INVENTION

The present invention is implemented to solve the foregoing problems. It is therefore an object of the present invention to provide an unevenness detecting sensor with a higher S/N ratio.

Another object of the present invention is to provide a high density, high resolution, simple fabrication process, little degradation and low cost unevenness detecting sensor.

Still another object of the present invention is to provide a reliable, robust personal ID system.

According to a first aspect of the present invention, there is provided an unevenness detecting sensor comprising: a sensing element array including N row by M column sensing elements, each sensing element having a sensing electrode and a converter for converting a capacitor formed between the sensing electrode and an object in close vicinity to the sensing electrode into one of a voltage and current; scanning lines disposed along columns of the sensing element array; and output lines disposed along rows of the sensing element array, wherein each of the sensing elements is connected to one of the scanning lines and to one of the output lines.

Here, the converter may consist of a MOS transistor that has its gate connected to the sensing electrode, one of its drain and source to one of the scanning lines, and the other of its drain and source to one of the output lines.

The MOS transistor may be one of an amorphous Si MOS transistor and a polysilicon MOS transistor.

The unevenness detecting sensor may further comprise diodes, each of which is interposed in a line connecting the MOS transistor to the output line in such a fashion that a forward direction of the diodes is from a terminal of the MOS transistor to the output line.

The unevenness detecting sensor may further comprise second MOS transistors, each of which is interposed in a line connecting the MOS transistor to the output line in such a fashion that a forward direction of the second MOS transistors is from a terminal of the MOS transistor to the output line.

The unevenness detecting sensor may further comprise reset lines disposed along the rows of the sensing element array, wherein each of the sensing elements may comprise a switch that has its first terminal connected to a connecting point of the sensing electrode with the converter, and has its second terminal connected to one of the reset lines.

The unevenness detecting sensor may further comprise control lines disposed along the columns of the sensing element array, wherein the switch may consist of a three terminal switch having a control terminal, and having its control terminal connected to one of the control lines.

The switch may consist of one of a diode and a diode-connected MOS transistor with its gate and drain connected.

The reset lines may be shared by the sensing elements adjacent to each other in a column direction.

The scanning lines may also serve as the control lines.

Each of the sensing elements may further comprise a diode consisting of one of an ordinary diode and a diode-connected MOS transistor with its gate and drain connected, wherein the diode may have its first terminal connected to a connecting point between the sensing electrode and the converter, and its second terminal connected to one of the scanning lines, in such a fashion that the diode is brought out of conduction when a scanning signal is applied to the one of the scanning lines.

The unevenness detecting sensor may further comprise a signal processing circuit for processing data fed from the sensing elements, wherein the signal processing circuit and the sensing elements are formed on a same substrate.

Each of the sensing electrodes may have a shape of one of squares and rectangles, and a pitch of the sensing elements in the array is less than 50 micrometers.

The N row by M column sensing element array may be scanned in a row direction when N/M is greater than one, and scanned in a column direction when N/M is less than one.

The unevenness detecting sensor may further comprise a dielectric layer deposited on the sensing electrodes.

The sensing elements and the signal processing circuit may be formed on a dielectric substrate.

The sensing electrodes may be formed in a layer separate from a layer including the converters and wiring, and the sensing electrodes may be disposed closer to a surface facing an object to be detected.

The unevenness detecting sensor may further comprise an image display device formed on a same substrate on which the sensing elements and the signal processing circuit are formed.

According to a second aspect of the present invention, there is provided a fingerprint ID system for identifying at least one fingerprint, the fingerprint ID system including an unevenness detecting sensor comprising: a sensing element array including N row by M column sensing elements, each sensing element having a sensing electrode and a converter for converting a capacitor formed between the sensing electrode and an object in close vicinity to the sensing electrode into one of a voltage and current; scanning lines disposed along columns of the sensing element array; and output lines disposed along rows of the sensing element array, wherein each of the sensing elements is connected to one of the scanning lines and to one of the output lines.

According to a third aspect of the present invention, there is provide a personal ID system including a finger ID system having an unevenness detecting sensor comprising: a sensing element array including N row by M column sensing elements, each sensing element having a sensing electrode and a converter for converting a capacitor formed between the sensing electrode and an object in close vicinity to the sensing electrode into one of a voltage and current; scanning lines disposed along columns of the sensing element array; and output lines disposed along rows of the sensing element array, wherein each of the sensing elements is connected to one of the scanning lines and to one of the output lines.

BRIEF DESCRIPTION OF THE DRAWINGS

Fig. 1 is a circuit diagram showing an arrangement of a major portion of an unevenness detecting sensor of an embodiment 1 in accordance with the present invention;

Fig. 2 is a circuit diagram showing an arrangement of a major portion of an unevenness detecting sensor of an embodiment 2 in accordance with the present invention;

Fig. 3 is a circuit diagram showing an arrangement of a major portion of an unevenness detecting sensor of an embodiment 3 in accordance with the present invention;

Fig. 4 is a circuit diagram showing an arrangement of a major portion of an unevenness detecting sensor of an embodiment 4 in accordance with the present invention;

Fig. 5 is a circuit diagram showing an arrangement of a major portion of an unevenness detecting sensor of an embodiment 5 in accordance with the present invention;

Fig. 6 is a circuit diagram showing an arrangement of a major portion of an unevenness detecting sensor of an embodiment 6 in accordance with the present invention;

Fig. 7 is a circuit diagram showing another arrangement of the major portion of the unevenness detecting sensor of the embodiment 6 in accordance with the present invention;

Fig. 8 is a circuit diagram showing an arrangement of a major portion of an unevenness detecting sensor of an embodiment 7 in accordance with the present invention;

Fig. 9 is a circuit diagram showing another arrangement of the major portion of the unevenness detecting sensor of the embodiment 7 in accordance with the present invention;

Fig. 10 is a circuit diagram showing an arrangement of a major portion of an unevenness detecting sensor of an embodiment 8 in accordance with the present invention;

Fig. 11 is a circuit diagram showing another arrangement of the major portion of the unevenness detecting sensor of the embodiment 8 in accordance with the present invention;

Fig. 12 is a circuit diagram showing a still another arrangement of the major portion of the unevenness detecting sensor of the embodiment 8 in accordance with the present invention;

Fig. 13 is a circuit diagram showing a still another arrangement of the major portion of the unevenness detecting sensor of the embodiment 8 in accordance with the present invention;

Fig. 14 is a circuit diagram showing an arrangement of a major portion of an unevenness detecting sensor of an embodiment 9 in accordance with the present invention;

Fig. 15 is a circuit diagram showing another arrangement of the major portion of the unevenness detecting sensor of the embodiment 9 in accordance with the present invention;

Fig. 16 is a circuit diagram showing a still another arrangement of the major portion of the unevenness detecting sensor of the embodiment 9 in accordance with the present invention;

Fig. 17 is a circuit diagram showing a still another arrangement of the major portion of the unevenness detecting sensor of the embodiment 9 in accordance with the present invention;

Fig. 18 is a diagram illustrating variations in the potential at a connecting point 1000 during a reset operation;

Fig. 19 is a circuit diagram showing an arrangement of a major portion of an unevenness detecting sensor of an embodiment 10 in accordance with the present invention;

Fig. 20 is a circuit diagram showing another arrangement of the major portion of the unevenness detecting sensor of the embodiment 10 in accordance with the present invention;

Fig. 21 is a circuit diagram showing an arrangement of a major portion of an unevenness detecting sensor of an embodiment 11 in accordance with the present invention;

Fig. 22 is a circuit diagram showing another arrangement of the major portion of the unevenness detecting sensor of the embodiment 11 in accordance with the present invention;

Fig. 23 is a block diagram showing an arrangement of an unevenness detecting sensor of an embodiment 12 in accordance with the present invention;

Fig. 24 is a circuit diagram showing an arrangement of the signal processing circuit as shown in Fig. 23;

Fig. 25 is a circuit diagram showing another arrangement of the signal processing circuit as shown in Fig. 23;

Fig. 26A is a cross-sectional view showing an unevenness detecting sensor of an embodiment 17 in accordance with the present invention;

Fig. 26B is a cross-sectional view showing a structure of a comparative unevenness detecting sensor;

Fig. 27 is a block diagram showing a configuration of an unevenness detecting device of an embodiment 18 in accordance with the present invention;

Fig. 28 is a block diagram showing a fingerprint ID system of an embodiment 19 in accordance with the present invention; and

Fig. 29 is a circuit diagram showing a major portion of a conventional unevenness detecting sensor.

## DETAILED DESCRIPTION OF THE PREFERRED EMBODIMENTS

The invention will now be described with reference to the accompanying drawings.

EMBODIMENT 1

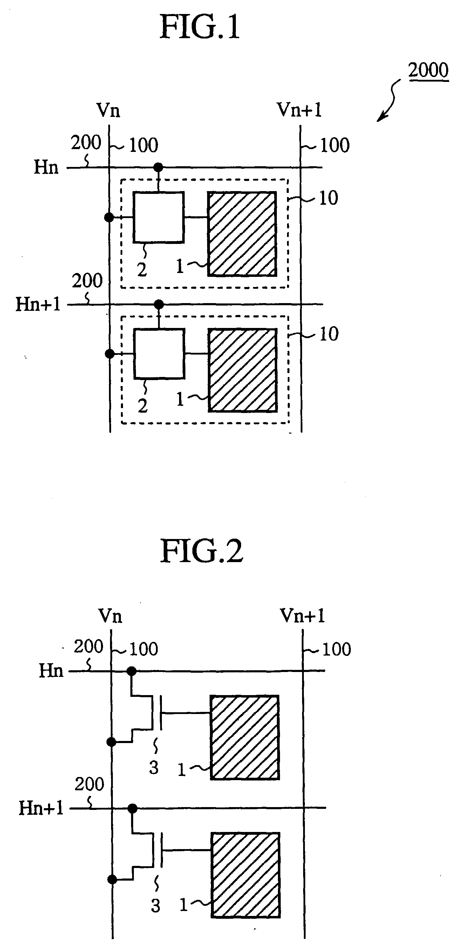

Fig. 1 is a circuit diagram showing an arrangement of a major portion of an unevenness detecting sensor of an embodiment 1 in accordance with the present invention. Each reference numeral 1 designates a sensing electrode; and 2 designates a capacitance-to-voltage converter or a capacitance-to-current converter. A combination of the sensing electrode 1 and converter 2 constitutes one sensing element 10. The sensing elements 10 are arrayed in N rows by M columns, forming a sensing element array 2000. A scanning line 100 is disposed along each column of the sensing element array, and an output line 200 is disposed along each row thereof.

An uneven surface of an object forms a gap filled with air or the like between the sensing electrodes 1 and the object. In other words, a capacitor (sensing capacitor), which has the capacitance depending on the unevenness of the object, is formed between each sensing electrode 1 and the object.

To measure the capacitance values, the capacitance-to-voltage converter or capacitance-to-current converter is required. Incorporating the converters 2 in individual sensing elements 10 can improve the S/N ratio. In addition, incorporating an amplifying function in the converters 2 can greatly improve the S/N ratio. The capacitance values are each measured by electrically scanning the scanning lines 100 and output lines 200, which provides the unevenness of the object two-dimensionally.

Conventionally, the charges stored in the sensing capacitors in the array are read outside the array. However, this reduces the S/N ratio because the small changes stored in the small sensing capacitors are further reduced owing to the capacitance transition between the sensing capacitors and the parasitic capacitance of lead wires. In contrast, incorporating the converters 2 of the capacitors into individual components of the array as in the present embodiment can circumvent the problem of the parasitic capacitance of the lead wires, thereby producing outputs without any problem involved in the parasitic capacitance.

EMBODIMENT 2

Fig. 2 is a circuit diagram showing an arrangement of a major portion of an unevenness detecting sensor of an embodiment 2 in accordance with the present invention. In Fig. 2, each reference numeral 3 designates a MOS transistor whose gate is connected to the sensing electrode 1. One of its drain and source is connected to the scanning line 100, and the other thereof is connected to the output line 200. When connecting the gate of the MOS transistor 3 to the sensing electrode 1, the capacitor (transistor capacitance) of the MOS transistor 3 is connected with the sensing capacitor in series. Accordingly, the gate voltage $V_G$ of the MOS transistor 3 is given by the following expression.

$$V_G = C_f(V_f - V_{ON})/(C_t + C_f) \text{ (in ON state)} = C_f(V_f - V_{Off})/(C_t + C_f) \text{ (in OFF state)} \qquad (1)$$

where, $C_f$ is the capacitance value of the sensing capacitor, $C_t$ is the capacitance value of the transistor capacitance, $V_{ON}$ is the signal level on the scanning signal line when it is in the ON state, $V_{Off}$ is the signal level in the OFF state, and the $V_f$ is the potential on the surface of the object. The expression shows that the gate voltage $V_G$ of the MOS transistor 3 varies depending on the sensing capacitor $C_f$, which means that the output current of the transistor depends on the sensing capacitor, thus forming the capacitor-to-current converter.

Connecting a capacitor to the output terminal of the MOS transistor 3 can store the charge corresponding to the output current. Thus, the output voltage depending on the sensing capacitor is obtained, and hence the capacitor-to-voltage converter can be formed. Measuring and analyzing the output current or output voltage two-dimensionally by scanning the scanning lines 100 and output lines 200 can detect the surface unevenness of the object.

Usually, the configuration of the capacitor-to-voltage converter or of the capacitor-to-current converter becomes complicated because the converter requires some components such as an amplifier and a capacitor. The present configuration, however, can be simplified because the single transistor 3 has the full capacitor-to-current conversion function, which can reduce the area occupied by the sensing element.

The present configuration is further characterized in that it supplies signals associated with the capacitor variations to the gates of the transistors 3. This makes it possible to sharply improve the S/N ratio as compared with the conventional system that supplies the capacitor variation signals to the drains of the transistors.

EMBODIMENT 3

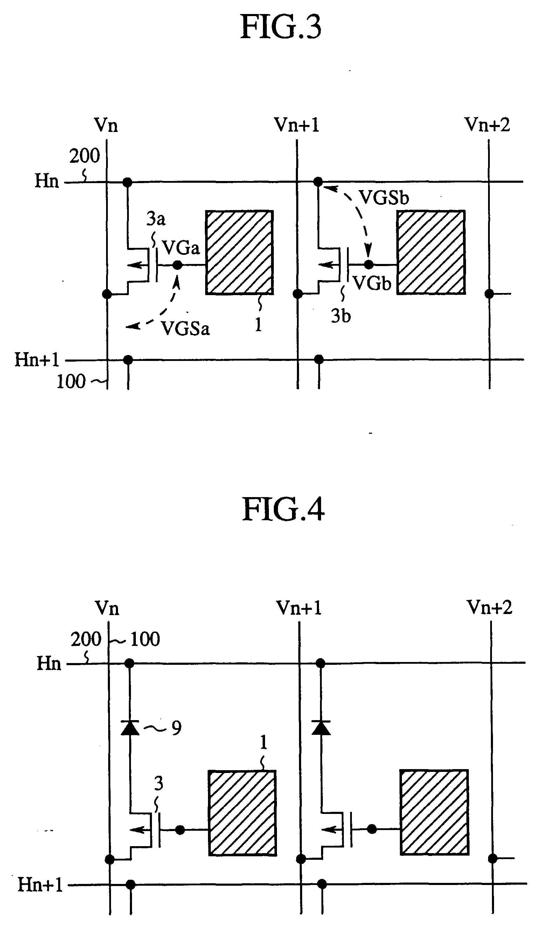

Fig. 3 is a circuit diagram showing an arrangement of a major portion of an unevenness detecting sensor of an embodiment 3 in accordance with the present invention. In Fig. 3, reference numerals 3a and 3b each designates a P-channel MOS transistor having the same threshold voltage Vth.

It is assumed that the initial potential of the output line Hn is 0 V, and that when a particular scanning line Vn is placed at a voltage equal to or higher than HIGH (3 V, for example), the remaining scanning lines are placed at LOW (0 V, for example).

When the scanning line Vn is placed at HIGH, a terminal of the MOS transistor 3a connected to the scanning line Vn functions as the source, and the other terminal thereof connected to the output line Hn functions as the drain. In this case, the gate voltage $V_{Ga}$ of the P-channel MOS transistor 3a takes a finite value in accordance with equation (1). When the potential difference $V_{GSa}$ across the gate and source of the P-channel MOS transistor 3a satisfies the relation $V_{GSa} = |V_{Ga} - Vn| \geq |Vth|$, the P-channel MOS transistor 3a is brought into conduction, so that a current begins to flow through the output line Hn, and increases the potential $V_{Hn}$ on the output line Hn.

On the other hand, the P-channel MOS transistor 3b has its one terminal supplied with a potential Vn+1 of 0 V, and the other terminal with the potential $V_{Hn}$ of a finite value (> 0 V). Thus, the terminal of the P-channel MOS transistor 3b connected to the output line Hn functions as its source, and the terminal connected to the scanning line Vn+1 functions as its drain.

As the potential on the output line Hn increases, the gate voltage $V_{Gb}$ of the P-channel MOS transistor 3b takes a finite value as the P-channel MOS transistor 3a. When the gate potential gate voltage $V_{Gb}$ increases with the increase in the potential of the output line Hn, and the potential difference $V_{GSb}$ across the gate and source of the P-channel MOS transistor 3b satisfies the relation $V_{GSb} = |V_{Gb} - V_{Hn}| \geq |Vth|$, the P-channel MOS transistor 3b is brought into conduction.

The output of the present sensor is supplied to an external processing circuit. The input impedance of the processing circuit is usually much higher than the input impedance of the P-channel MOS transistor 3b in the ON state. Therefore, the current flowing from the P-channel MOS transistor 3a when $V_{GSb} > |Vth|$ flows into the scanning line Vn+1 whose potential is fixed at LOW through the P-channel MOS transistor 3b.

Accordingly, the potential $V_{Hn}$ of the output line Hn does not exceed the potential at which the P-channel MOS transistor 3b starts to pass the current. The range of the potential the output line Hn can take is about $0 < V_{Hn} < |Vth|$ in a normal operation.

Thus, the dynamic range of the output of the sensor is limited by the magnitude of the threshold voltage Vth of the P-channel MOS transistors 3a and 3b, so that the output dynamic range increases or decreases depending on the value of the threshold voltage Vth.

When constructing the sensor using single crystal silicon (Si) MOS transistors, the P-channel MOS transistors have a rather small threshold voltage Vth of about 0.7 V.

In view of this, the output dynamic range can be increased by intentionally increasing the threshold voltage Vth above 0.8 V, for example, by introducing boron ions into the semiconductor surface under the gate silicon dioxide in the N-channel by ion implantation, thereby increasing the S/N ratio.

In this case, increasing only the threshold voltage Vth of the MOS transistors in the array in the fabrication process can increase the output dynamic range without changing the operation frequency of the MOS transistors in the peripheral circuits.

On the other hand, MOS transistors other than the single crystal Si MOS transistors, such as amorphous Si MOS transistors, low-temperature polysilicon MOS transistors or high-temperature polysilicon MOS transistors, have a problem of having a threshold voltage Vth of about $2 V < |Vth| < 5 V$. Applying these devices with the large threshold voltage Vth to the present embodiment makes it possible to fabricate the unevenness detecting sensor with a large output dynamic range.

Although the P-channel MOS transistors are used in the foregoing description as an example, N-channel MOS transistors can also be used without impairing a similar effect.

EMBODIMENT 4

Fig. 4 is a circuit diagram showing an arrangement of a major portion of an unevenness detecting sensor of an embodiment 4 in accordance with the present invention.

In the foregoing embodiment 3, it is shown that the output dynamic range of the sensor is limited by the threshold value of the P-channel MOS transistors.

In view of this, the present embodiment introduces a diode 9 into each line connecting the MOS transistor 3 with the output line 200 in such a manner that the forward direction of the diode is from the terminal of the MOS transistor 3 to the output line 200. This will prevent the current from flowing from the output line 200 to the scanning lines 100 through the remaining P-channel MOS transistors not involved in the scanning. Thus, the potential of the output line 200 can be increased beyond the threshold value of the MOS transistor 3, enabling the output dynamic range to be increased independently of the threshold value of the P-channel MOS transistors.

Although the P-channel MOS transistors are used in the foregoing description as an example, N-channel MOS transistors can also be used without impairing a similar effect.

EMBODIMENT 5

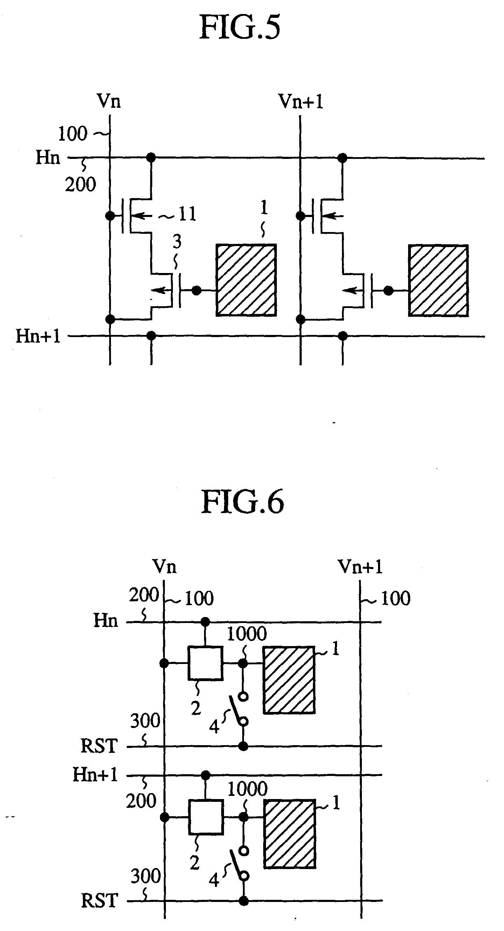

Fig. 5 is a circuit diagram showing an arrangement of a major portion of an unevenness detecting sensor of an embodiment 5 in accordance with the present invention. In Fig. 5, a reference numeral 11 designates an N-channel MOS transistor.

As shown in Fig. 5, the present embodiment introduces the N-channel MOS transistor 11 into each lead connecting the MOS transistor 3 with the output line 200 in such a fashion that the forward direction of the N-channel MOS transistor is from the terminal of the MOS transistor 3 to the output line 200. More specifically, the present embodiment has the gate of the N-channel MOS transistor 11 connected to the scanning line 100 and the remaining two terminals thereof to the output line 200 and MOS transistor 3, respectively.

With such connections of the N-channel MOS transistor 11, only the N-channel MOS transistors 11 connected with the scanned line Vn, for example, are brought into conduction, without bringing into conduction the remaining N-channel MOS transistors 11 connected to the unscanned line Vn+1, for example.

Thus, the current from the MOS transistor 3 flows into only the output line 200 associated therewith, which allows the potential of the output line 200 to be increased beyond the threshold value of the MOS transistor 3. This makes it possible to increase the output dynamic range to be increased without being limited by the threshold value of the P-channel MOS transistors.

Furthermore, the present embodiment can construct the sensor only with the MOS transistors without using the diodes as the embodiment 4.

The MOS transistors 3 and N-channel MOS transistors 11 can be interchanged, or the same type MOS transistors can be used without impairing a similar effect by providing each lead, which connects a first MOS transistor used as the converter to the output line 200, with a second MOS transistor in such a manner that its forward direction is from the terminal of the first MOS transistor to the output line 200.

EMBODIMENT 6

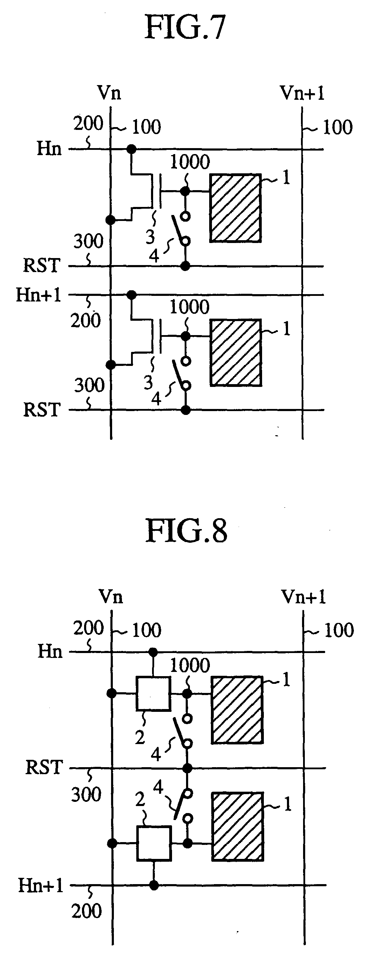

Figs. 6 and 7 are circuit diagrams showing an arrangement of a major portion of an unevenness detecting sensor of an embodiment 6 in accordance with the present invention: Fig. 6 shows an arrangement adding switches to the circuit as shown in Fig. 1; and Fig. 7 shows an arrangement adding switches to the circuit as shown in Fig. 2. Each reference numeral 300 designates a reset line disposed along the row of the sensing element array; and 4 designates a switch.

At each connecting point 1000 between the sensing electrode 1 and the capacitor-to-voltage converter or capacitor-to-current converter 2, residual charges can be left unless sufficient time has elapsed after measuring the sensing capacitor. The residual charges will deteriorate the S/N ratio. Hence it is better to eliminate them at an optimum reset timing using the switches 4 connected to the reset lines 300. The arrangement can remove the effect of the residual charges, improving the S/N ratio.

EMBODIMENT 7

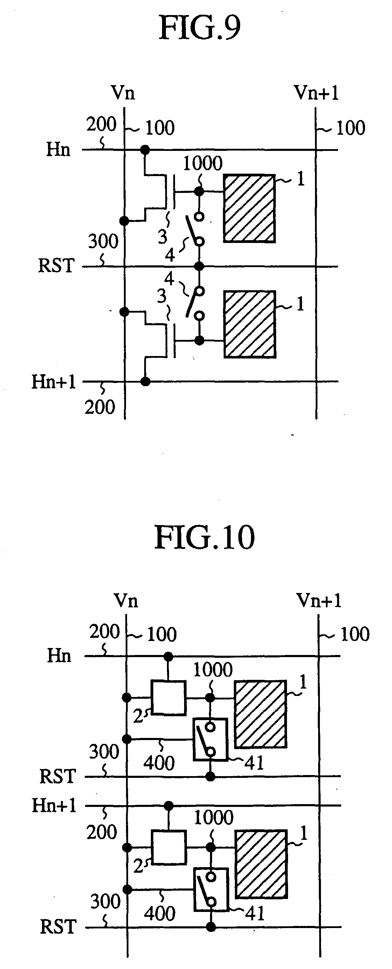

Figs. 8 and 9 are circuit diagrams showing an arrangement of a major portion of an unevenness detecting sensor of an embodiment 7 in accordance with the present invention: Fig. 8 disposes the sensing elements of Fig. 6 in line symmetry with respect to the reset lines 300; and Fig. 9 disposes the sensing elements of Fig. 7 in line symmetry with respect to the reset lines 300.

Installing switches 4 requires the reset lines 300, resulting in an increase in the total area of the array. Sharing the reset line 300 between the adjacent two sensing elements as shown in these figures can halve the number of reset lines 300 as compared with the foregoing embodiment 5. Thus, the configuration of the present embodiment can improve the integration density of the sensor by an amount of the area reduction in the wiring, and can prevent the S/N ratio from being reduced because of the parasitic capacitance due to the wiring.

EMBODIMENT 8

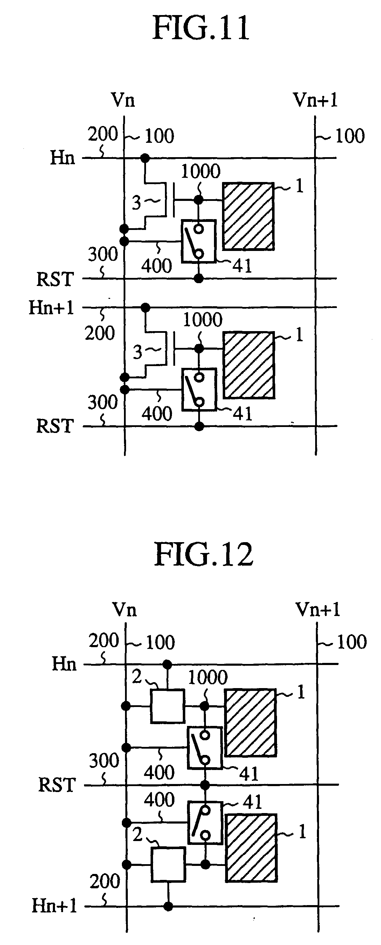

Figs. 10, 11, 12 and 13 are circuit diagrams showing an arrangement of a major portion of an unevenness detecting sensor of an embodiment 8 in accordance with the present invention, which replace the switches 4 of Figs. 6, 7, 8 and 9 with switches 41 having a control terminal 400.

Installing such switches 41 will increase the total area of the array because they require control lines for controlling them. However, since the reset can be accomplished at an interval of scanning, using the scanning signal for switch control by connecting the control terminals 400 of the switches 41 as shown in Figs. 10-13 can circumvent the need to provide the control lines of the switches 41. In other words, the reset can be achieved using the switches 41 that are opened during the scanning and closed at intervals of the scanning.

Since the present configuration can obviate the control lines of the switches 41, the integration density of the sensor can be improved. In addition, making the control lines of the switches 41 unnecessary can implement considerable noise reduction, improving the S/N ratio.

EMBODIMENT 9

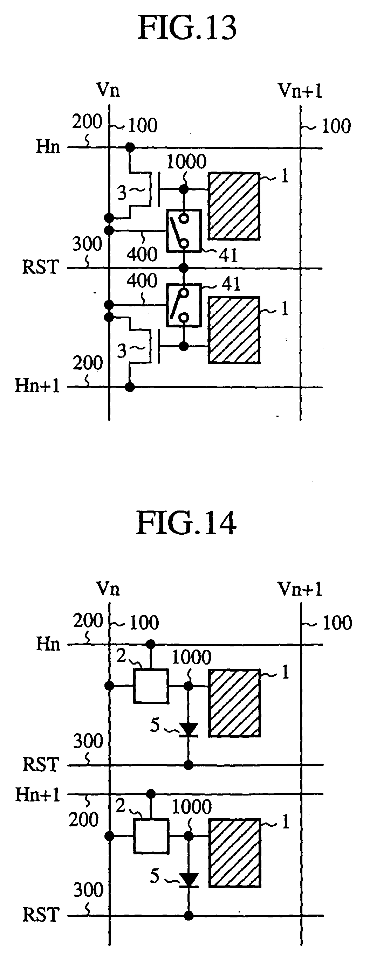

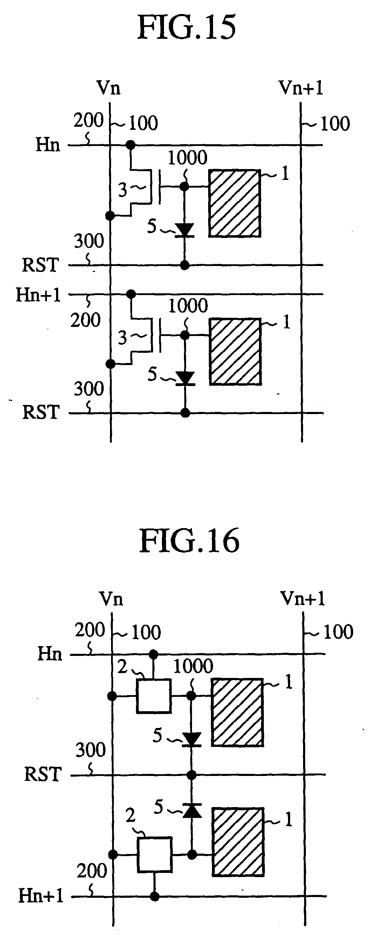

Figs. 14, 15, 16 and 17 are circuit diagrams showing an arrangement of a major portion of an unevenness detecting sensor of an embodiment 9 in accordance with the present invention, which replace the switches 4 of Figs. 6, 7, 8 and 9 with diodes 5.

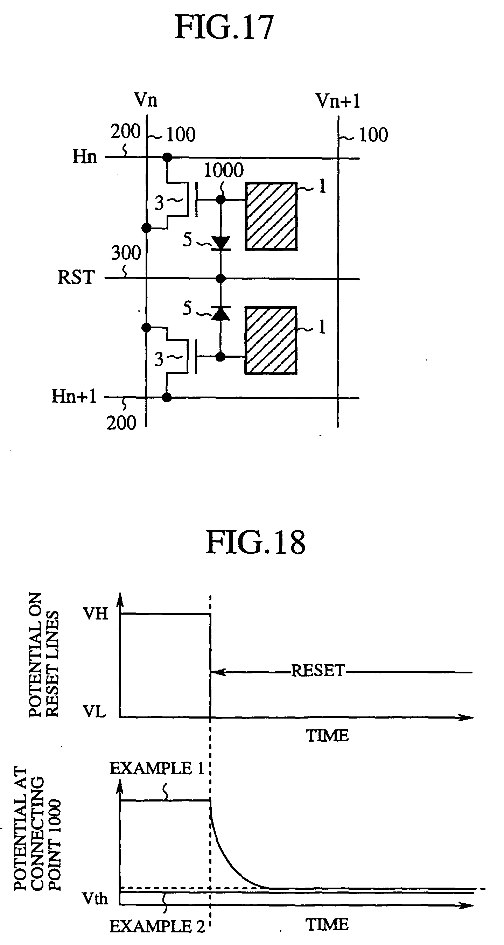

Fig. 18 illustrates transitions in node potentials of the sensing element before and during the reset state. It is assumed here that $V_H$ is the maximum potential on the reset line 300, $V_L$ is the potential on the reset line 300 in the reset state, and $V_{th}$ is the threshold voltage of the diodes 5, where $V_H > V_{th} > V_L$; and that $V_D$ is a voltage applied to the diode 5 in its forward direction (here, the reset voltage $V_L$ is assumed to be 0 V for the sake of simplicity). The potential $V_{1000}$ of the connecting point 1000 is $0 \leqq V_{1000} \leqq V_H$. The diodes 5 are brought into conduction when applied with a forward voltage equal to or greater than the threshold voltage $V_{th}$, and brought out of conduction when applied with a voltage less than the threshold voltage or with a reverse voltage.

In the non-reset state, because $V_D = V_{1000} - V_H < 0$, the diodes 5 do not conduct so that signals corresponding to the capacitors are output. In the reset state, because the state is changed to $V_D = V_{1000} - V_L = V_{1000}$, when $V_{1000} > V_{th}$, as in an example 1 of Fig. 18, the diodes 5 conduct, placing $V_{1000} = V_{th}$. In contrast, when $V_{1000} < V_{th}$ as in an example 2, the diodes 5 are kept out of conduction, maintaining $V_{1000}$ at its previous potential. Thus, the potential $V_{1000}$ at the connecting point 1000 becomes $V_{1000} \leqq V_{th}$ without exception after the reset in the present arrangement.

The present configuration can improve the S/N ratio because the potentials at the connecting points 1000 of all the sensing elements in the array are surely reset at a value equal to or less than $V_{th}$ before the scanning. In addition, replacing the switches with the diodes can obviate the need for the control lines of the switches, thereby improving the resolution.

EMBODIMENT 10

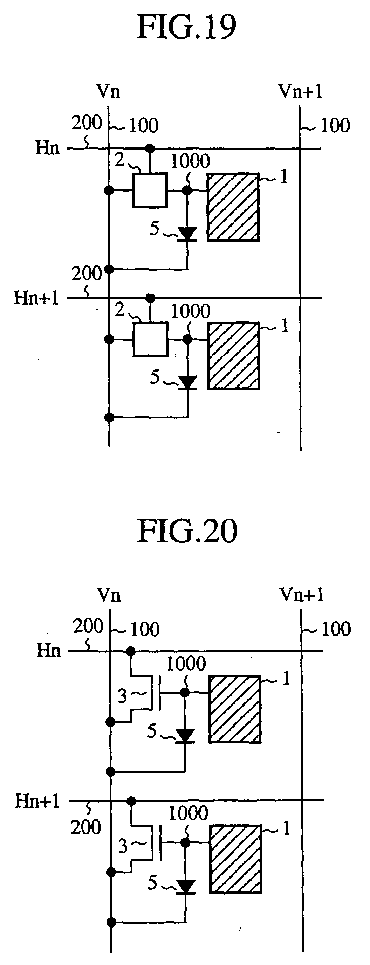

Figs. 19 and 20 are circuit diagrams showing an arrangement of a major portion of an unevenness detecting sensor of an embodiment 10 in accordance with the present invention, which add diodes 5 to the circuits as shown in Figs. 1 and 2, respectively. The present embodiment 10 has the diodes 5 connected to the scanning lines 100 without installing the reset lines. The reset lines can be eliminated by connecting the diodes 5 between the connecting points 1000 and scanning lines 100 in such a direction that the diodes are brought out of conduction when the scanning signal is turned on, and are brought into conduction when the scanning signal is turned off.

The present configuration can improve the S/N ratio and the integration density because it excludes the reset lines.

EMBODIMENT 11

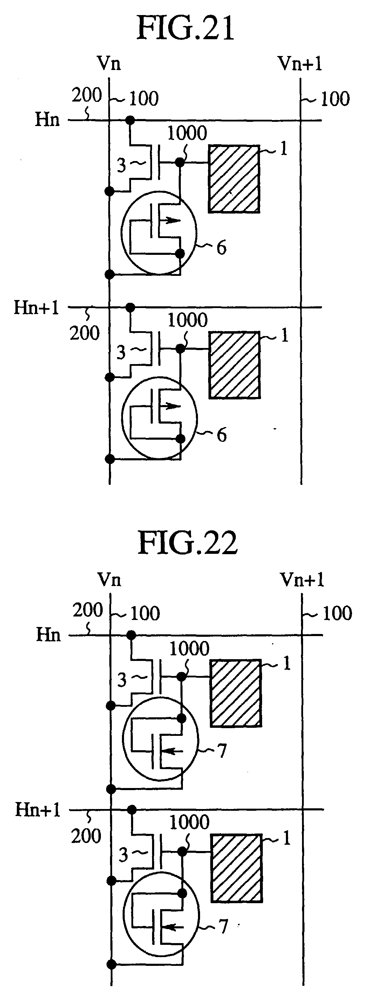

Figs. 21 and 22 are circuit diagrams showing an arrangement of a major portion of an unevenness detecting sensor of an embodiment 11 in accordance with the present invention. Using MOS transistors with their gate and drain connected as the diodes instead of the common PN junction diodes or the like can fabricate the sensor in the MOS process only. Fig. 21 has a configuration that adds, to the capacitor-to-current converters using the MOS transistors, P-channel MOS transistors 6 as the switches, whereas Fig. 22 has a configuration that adds, to the capacitor-to-current converters using the MOS transistors, N-channel MOS transistors 7 as the switches.

Whether to use the N-channel MOS transistors 7 or the P-channel MOS transistors 6 is decided optimally depending on the difference in the control signals and output signals. Usually, the N-channel MOS transistors 7 can quicken the reset operation because they can transport greater current in shorter duration than the P-channel MOS transistors 6.

The present configuration can eliminate the process for fabricating the diodes, resulting in the cost reduction because the sensor is fabricated only through the MOS process.

EMBODIMENT 12

Incorporating in the sensor a signal processing circuit for measuring the data from the sensing element array can facilitate the design of a peripheral circuit other than the sensor, and improve the S/N ratio by carrying out the signal processing inside the chip.

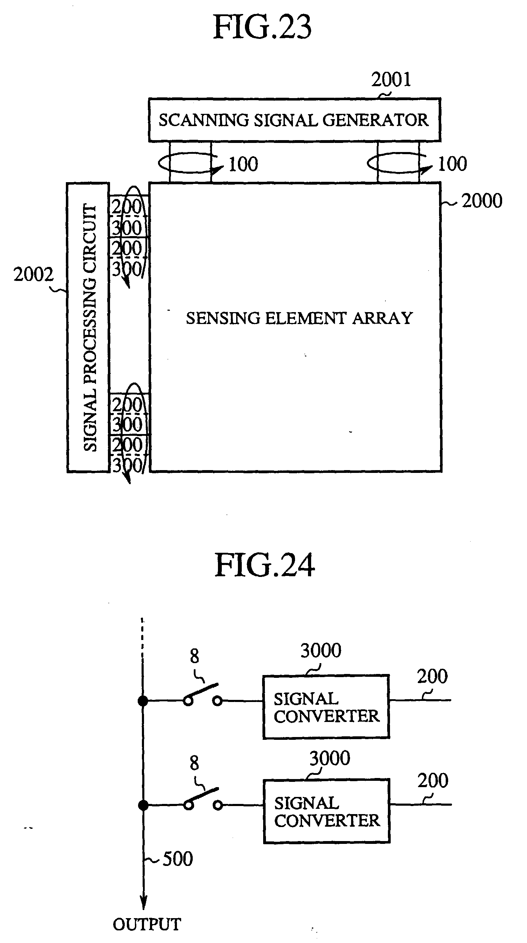

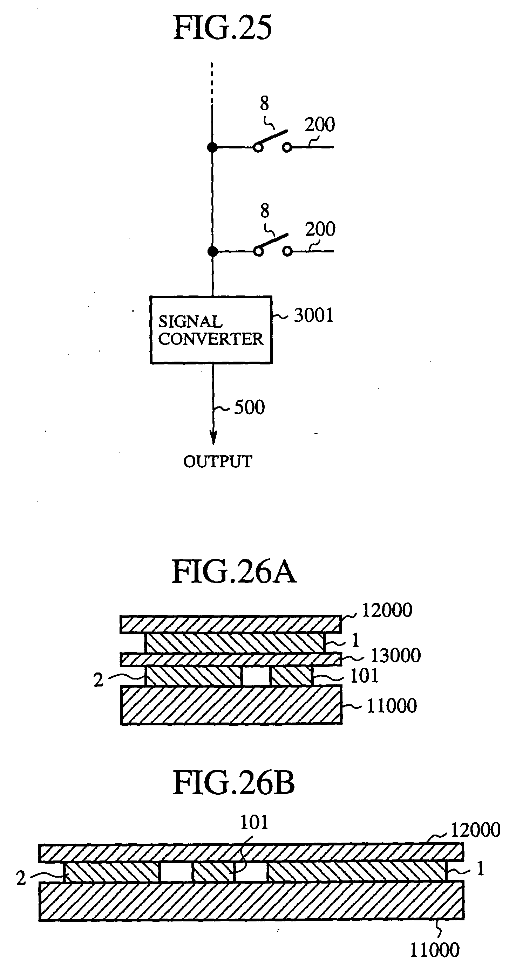

Fig. 23 is a block diagram of a sensor including a peripheral circuit incorporated thereinto. Reference numerals 100, 200 and 300 designate the scanning lines, the output lines and the reset lines, respectively, as in the foregoing embodiments; the reference numeral 2001 designates a scanning signal generator; 2002 designates a signal processing circuit; and 2000 designates a sensing element array. Figs. 24 and 25 each show an example of the signal processing circuit, in which a reference numeral 8 designates a read switch; 500 designates a signal output line; and 3000 and 3001 each designate a signal converter. Providing each lead line with the signal converter 3000 as shown in Fig. 24 has an advantage of being able to reduce the operation frequency of the signal converters. However, the configuration will increase the area occupied by the chip. In contrast, providing only one signal converter 3001 to the signal output line 500 has an advantage of being able to reduce the area occupied by the chip, though the operation frequency of the signal converters increases.

EMBODIMENT 13

When apply the unevenness detecting sensors of the foregoing embodiments to a fingerprint sensor, it should be considered that a fingerprint is characterized by including unevenness at nearly regular intervals. Thus, the area for detecting the regular continuous unevenness can be increased effectively by making the shape of the sensing electrodes square or rectangular rather than circular or trapezoidal. Because the pitch of fingerprints of children is usually about 100 micrometers, the sensing electrodes disposed at intervals less than 50 micrometers have a resolution required to fully detect fingerprints.

EMBODIMENT 14

Considering the ratio of the height of the sensing element array to its width, that is, the value N/M in the N row by M column array, it is possible to scan the array in the row (horizontal) direction when the ratio is greater than one, whereas in the column (vertical) direction when the ratio is less than one. The signals from the sensing elements are transferred to the signal processing circuit through the lead lines. The lead lines have cross points with the scanning lines by the number of the scanning signal lines, and can have cross points with other wiring lines. The cross points will deteriorate the S/N ratio because of the parasitic capacitance formed at the cross points. Thus, considering the ratio of the height to the width of an object to be measured, the S/N ratio of the sensor can be improved by configuring it in such a manner that the number of the cross points of the lead lines with other wiring lines are reduced.

EMBODIMENT 15

The sensor can also have a structure that includes a dielectric layer deposited on the sensing electrodes. When the total area of the array is limited, the variations in the sensing capacitors, which are determined by the dielectric constant of air, are small. Adding a capacitor connected in series with the sensing capacitors will make it possible to detect the variations in the sensing capacitors at higher sensitivity, thereby improving the S/N ratio of the sensor. Besides, this offers an advantage of being able to protect the sensing electrodes from being deteriorated.

EMBODIMENT 16

The sensor can also be formed on a dielectric substrate rather than on a common Si substrate. The Si substrate, which is somewhat conductive, causes parasitic capacitance between it and a circuit, deteriorating the S/N ratio. Because capacitance in a floating state can be ignored, forming the sensor on the dielectric substrate can improve the S/N ratio. Furthermore, this can reduce the cost because of circumventing the expensive Si substrate.

EMBODIMENT 17

Figs. 26A and 26B are views illustrating an arrangement of a major portion of an unevenness detecting sensor of an embodiment 17 in accordance with the present invention: Fig. 26A is a cross-sectional view of the structure of the unevenness detecting sensor of the present embodiment; and Fig. 26B is a cross-sectional view of the structure of an unevenness detecting sensor for comparison. In these figures, the reference numeral 101 designates a wiring metal such as the scanning line and output line; 11000 designates a substrate; 12000 designates a protective coating; and 13000 designates an insulating layer.

As shown in Fig. 26A, the present embodiment forms on the substrate 11000 the converters 2 for converting the capacitors to the voltages or currents, and wiring 101, forms thereon the sensing electrodes 1 via the insulating layer 13000, and forms thereon the protective coating 12000. Thus, the sensing electrodes 1 are formed in a different layer from the converters 2 and wiring 101, and are disposed closer to an object to be detected than the converters 2 and wiring 101.

To form the unevenness detecting sensors described in the foregoing embodiments 1-16 on the substrate 11000, the structure as shown in Fig. 26B can be implemented which comprises the sensing electrodes 1, converters 2 and wiring 101 in the same layer. In this structure, however, the converters 2 and wiring 101 are linked with the surface, that is, with the object to be detected, only via the protective coating 12000.

Therefore, when the object with which the unevenness is to be detected (subject) carries charges, an instantaneous current will flow into the sensor through the protective coating 12000 at the moment the object contacts the surface of the sensor, which could produce an electrical breakdown of the converters themselves or of a peripheral circuit through the wiring.

Let us consider the case using MOS transistors to form the converters 2. Although single crystal Si MOS transistors that are produced through a common fabrication process are small in size, MOS transistors produced using other processes, such as amorphous Si MOS transistors, low-temperature polysilicon MOS transistors or high-temperature polysilicon MOS transistors, must occupy greater area to achieve performance close to that of the single crystal Si MOS transistors.

At the same time, the sensing electrodes 1 in the array require a certain area to detect the unevenness.

Accordingly, forming the converters 2 and sensing electrodes 1 in the same layer will increase the array pitch, resulting in degradation in the resolution.

In contrast with this, the present embodiment forms the sensing electrodes 1 in the layer different from the converters 2 and wiring 101 with disposing the sensing electrodes 1 closer to the object to be detected. Accordingly, the converters 2 and wiring 101 are operatively connected with the surface through the insulating layer 13000, sensing electrodes 1 and protective coating 12000. This will block the instantaneous current caused by the charges carried by the object to be detected, thereby preventing the electrical breakdown of the converters 2 and peripheral circuit.

Furthermore, the present embodiment offers an advantage of being able to reduce the array pitch.

Although the converters 2 and wiring 101 are disposed in the same layer in Fig. 26A, it is obvious that they can be disposed in different layers.

EMBODIMENT 18

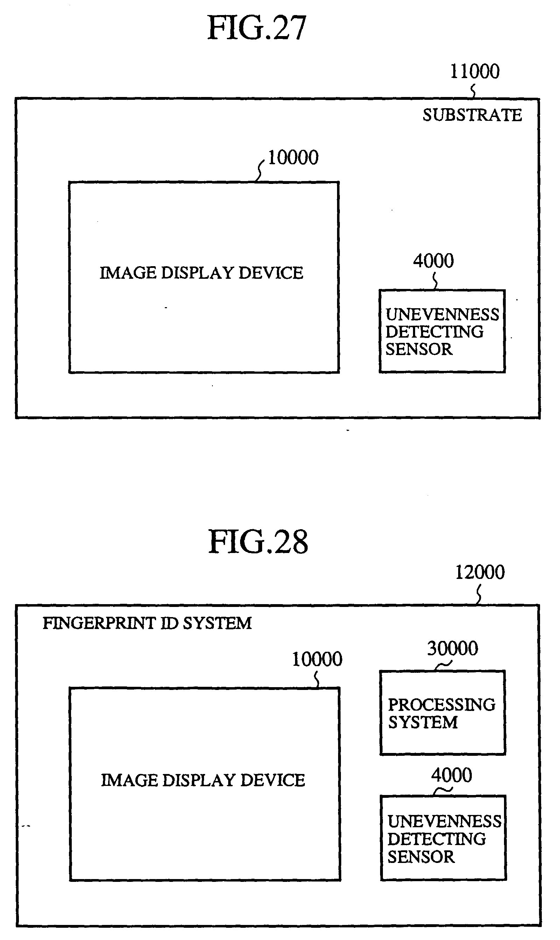

As shown in Fig. 27, a sensor can be integrated with an image display device into an unevenness detecting device. In Fig. 27, the reference numeral 10000 designates an image display device such as a TFT (thin film transistor) display device; and 4000 designates an unevenness detecting sensor. They are formed on a single substrate 11000. A conventional system that requests a user to input information in accordance with the instructions displayed on its screen is costly because a sheet-like sensor is affixed on the image display device. In contrast with this, the present embodiment can reduce the cost because the sensor shares the input output substrate with the image display device.

EMBODIMENT 19

A fingerprint ID system can be constructed which comprises the sensor, a memory, a microprocessor and a power supply, and can identify by itself at least one fingerprint. For example, as shown in Fig. 28, a fingerprint ID system 12000 can be configured using an image display device 10000, an unevenness detecting sensor 4000 and a processing system 30000. The system can be used at a site isolated from other processing systems. For example, it can be applied to a door. Because it is isolated from an external system, it is difficult to interfere the transfer of information, which serves to improve the safety.

EMBODIMENT 20

The unevenness detecting sensors described in the foregoing embodiments are applicable to a personal ID system such as an ATM (automatic teller machine) and credit card ID machine. Although the conventional systems make identification using only a password, the present system identifies using a physical feature such as a fingerprint. This can greatly promote the safety.

**Claims**

1. An unevenness detecting sensor comprising:

   a sensing element array (2000) including N row by M column sensing elements (10), each sensing element having a sensing electrode (1) and a converter (2) for converting a capacitor formed between the sensing electrode and an object in close vicinity to the sensing electrode into one of a voltage and current;
   scanning lines (100) disposed along columns of said sensing element array; and
   output lines (200) disposed along rows of said sensing element array,
        wherein each of said sensing elements is connected to one of said scanning lines and to one of said output lines.

2. The unevenness detecting sensor according to claim 1, wherein said converter (2) consists of a MOS transistor (3) that has its gate connected to said sensing electrode, one of its drain and source to one of said scanning lines, and the other of its drain and source to one of said output lines.

3. The unevenness detecting sensor according to claim 2, wherein said MOS transistor (3) is one of an amorphous Si MOS transistor and a polysilicon MOS transistor.

4. The unevenness detecting sensor according to claim 2, further comprising diodes (9), each of which is interposed in a line connecting said MOS transistor to said output line in such a fashion that a forward direction of said diodes is from a terminal of said MOS transistor to said output line.

**5.** The unevenness detecting sensor according to claim 2, further comprising second MOS transistors (11), each of which is interposed in a line connecting said MOS transistor (3) to said output line (200) in such a fashion that a forward direction of said second MOS transistors is from a terminal of said MOS transistor to said output line.

**6.** The unevenness detecting sensor according to claim 1, further comprising reset lines (300) disposed along the rows of said sensing element array, wherein each of said sensing elements (10) comprises a switch (4, 41 or 5) that has its first terminal connected to a connecting point of said sensing electrode with said converter, and has its second terminal connected to one of said reset lines.

**7.** The unevenness detecting sensor according to claim 6, further comprising control lines (100) disposed along the columns of said sensing element array, wherein said switch consists of a three terminal switch (41) having a control terminal, and having its control terminal connected to one of said control lines.

**8.** The unevenness detecting sensor according to claim 6, wherein said switch consists of one of a diode (5) and a diode-connected MOS transistor (6) with its gate and drain connected.

**9.** The unevenness detecting sensor according to claim 6, wherein said reset lines (300) are shared by said sensing elements adjacent to each other in a column direction.

**10.** The unevenness detecting sensor according to claim 7, wherein said scanning lines (100) also serve as said control lines.

**11.** The unevenness detecting sensor according to claim 1, wherein each of said sensing elements (10) further comprises a diode (5 or 6) consisting of one of an ordinary diode (5) and a diode-connected MOS transistor (6) with its gate and drain connected, and wherein said diode has its first terminal connected to a connecting point between said sensing electrode and said converter, and has its second terminal connected to one of said scanning lines, in such a fashion that said diode is brought out of conduction when a scanning signal is applied to said one of said scanning lines.

**12.** The unevenness detecting sensor according to claim 1, further comprising a signal processing circuit (2002) for processing data fed from said sensing elements, wherein said signal processing circuit and said sensing elements are formed on a same substrate.

**13.** The unevenness detecting sensor according to claim 1, wherein each of said sensing electrodes (1) has a shape of one of squares and rectangles, and a pitch of said sensing elements (10) in the array is less than 50 micrometers.

**14.** The unevenness detecting sensor according to claim 1, wherein said N row by M column sensing element array (2000) is scanned in a row direction when N/M is greater than one, and is scanned in a column direction when N/M is less than one.

**15.** The unevenness detecting sensor according to claim 1, further comprising a dielectric layer (12000) deposited on said sensing electrodes (1).

**16.** The unevenness detecting sensor according to claim 12, wherein said sensing elements (10) and said signal processing circuit (2002) are formed on a dielectric substrate.

**17.** The unevenness detecting sensor according to claim 1, wherein said sensing electrodes (1) are formed in a layer separate from a layer including said converters (2) and wiring (101), and said sensing electrodes are disposed closer to a surface facing an object to be detected.

**18.** The unevenness detecting sensor according to claim 12, further comprising an image display device (10000) formed on a same substrate (11000) on which said sensing elements and said signal processing circuit (2002) are formed.

**19.** A fingerprint ID system for identifying at least one fingerprint, said fingerprint ID system including an unevenness detecting sensor comprising:

a sensing element array (2000) including N row by M column sensing elements (10), each sensing element having a sensing electrode (1) and a converter (2) for converting a capacitor formed between the sensing electrode and an object in close vicinity to the sensing electrode into one of a voltage and current;

scanning lines (100) disposed along columns of said sensing element array; and

output lines (200) disposed along rows of said sensing element array,

wherein each of said sensing elements is connected to one of said scanning lines and to one of said output lines.

20. A personal ID system including a finger ID system having an unevenness detecting sensor comprising:

a sensing element array (2000) including N row by M column sensing elements (10), each sensing element having a sensing electrode (1) and a converter (2) for converting a capacitor formed between the sensing electrode and an object in close vicinity to the sensing electrode into one of a voltage and current;

scanning lines (100) disposed along columns of said sensing element array; and

output lines (200) disposed along rows of said sensing element array,

wherein each of said sensing elements is connected to one of said scanning lines and to one of said output lines.

# FIG.1

# FIG.2

# FIG.3

# FIG.4

# FIG.5

# FIG.6

# FIG.7

Vn               Vn+1

200 ~100       ~100

Hn

1000

1

300

3
4

RST

Hn+1

1000

200

1

300

3
4

RST

# FIG.8

Vn               Vn+1

200 ~100       ~100

Hn

1000

1

2
4

RST

300

2 4

1

Hn+1

200

# FIG.9

# FIG.10

# FIG.11

# FIG.12

# FIG.13

# FIG.14

19

# FIG.15

# FIG.16

# FIG.17

# FIG.18

# FIG.19

# FIG.20

# FIG.21

# FIG.22

# FIG.23

2001

SCANNING SIGNAL GENERATOR

100    100

2000

2002

SIGNAL PROCESSING CIRCUIT

200
300
200
300

200
300
200
300

SENSING ELEMENT ARRAY

# FIG.24

8    3000

SIGNAL CONVERTER    200

8    3000

SIGNAL CONVERTER    200

500

OUTPUT

# FIG.25

8
200

8
200

SIGNAL
CONVERTER ∼3001

∼500

OUTPUT

# FIG.26A

12000
1
13000
101
11000
2

# FIG.26B

101
12000
1
2
11000

# FIG.27

11000

SUBSTRATE

10000

IMAGE DISPLAY DEVICE

4000

UNEVENNESS
DETECTING
SENSOR

# FIG.28

12000

FINGERPRINT ID SYSTEM

10000

30000

PROCESSING
SYSTEM

IMAGE DISPLAY DEVICE

4000

UNEVENNESS
DETECTING
SENSOR

# FIG.29

**European Patent Office**

**EUROPEAN SEARCH REPORT**

Application Number

EP 00 10 6857

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 52135 A (VERIDICOM INC) 19 November 1998 (1998-11-19) | 1,2,4,5, 12,13, 15,16, 19,20 | G01B7/34 G06K9/00 G01D5/241 |
| Y | * page 5, line 26 – page 7, line 22 * * page 15, line 12 – page 17, line 11; figures 5,6,8 * * page 22, line 3 – line 26 * * page 10, line 2 – line 3 * | 3,17 | |
| X,D | WO 97 40744 A (PHILIPS ELECTRONICS NV ;PHILIPS NORDEN AB (SE)) 6 November 1997 (1997-11-06) | 1,12,16 | |
| Y | * page 7, line 8 – line 22 * | 3 | |
| Y | WO 98 52147 A (HARRIS CORP) 19 November 1998 (1998-11-19) * page 2, line 32 – page 3, line 6; figure 2 * | 17 | |
| X | WO 98 49691 A (KONINKL PHILIPS ELECTRONICS NV ;PHILIPS AB (SE)) 5 November 1998 (1998-11-05) | 1,6,8 | TECHNICAL FIELDS SEARCHED (Int.Cl.7) |
| A | * page 5, line 5 – line 15; figure 2 * | 7,9-11 | G01B G06K G01D H03K |

The present search report has been drawn up for all claims

| Place of search | Date of completion of the search | Examiner |
|---|---|---|
| THE HAGUE | 10 July 2000 | Clevorn, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 10 6857

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2000

| Patent document cited in search report | | Publication date | Patent family member(s) | | Publication date |
|---|---|---|---|---|---|
| WO 9852135 | A | 19-11-1998 | US | 6049620 A | 11-04-2000 |
| | | | AU | 7379698 A | 08-12-1998 |
| | | | EP | 0981800 A | 01-03-2000 |
| WO 9740744 | A | 06-11-1997 | EP | 0836417 A | 22-04-1998 |
| | | | JP | 11508806 T | 03-08-1999 |
| | | | US | 5978496 A | 02-11-1999 |
| WO 9852147 | A | 19-11-1998 | US | 5940526 A | 17-08-1999 |
| | | | AU | 7290298 A | 08-12-1998 |
| | | | EP | 0981801 A | 01-03-2000 |
| WO 9849691 | A | 05-11-1998 | EP | 0920669 A | 09-06-1999 |

EPO FORM P0459

For more details about this annex : see Official Journal of the European Patent Office, No. 12/82